Europäisches Patentamt

European Patent Office

Office européen des brevets

(19)

(11) Publication number: **0 085 576**
A2

(12)  # EUROPEAN PATENT APPLICATION

(21) Application number: **83300520.0**

(22) Date of filing: **02.02.83**

(51) Int. Cl.³: **B 01 D 46/10**
**B 01 D 39/16, F 02 C 7/052**
**B 01 D 39/12**

(30) Priority: **02.02.82 GB 8202880**

(43) Date of publication of application:
**10.08.83 Bulletin 83/32**

(84) Designated Contracting States:
**DE FR GB IT NL**

(71) Applicant: **PARMATIC FILTER CORPORATION**
**92 Newark Pompton Turnpike**
**Wayne New Jersey 07470(US)**

(72) Inventor: **Mavros, Stratos**
**585 Farmdale Road**
**Franklin Lakes New Jersey 07417(US)**

(74) Representative: **Woodin, Anthony John et al,**
**Fitzpatricks Kern House 61/62 Lincoln's Inn Fields**
**London WC2B 6EX(GB)**

(54) Separating devices and methods.

(57) A separating device and method, particularly for removing moisture particles from air entering the air intake of a gas turbine for ships, comprises two separating means through which the air flows consecutively, namely a first separating means in the form of an impact filtering pad (1) and a second separating means in the form of an inertia separating means (2) (e.g. vanes). The impact filtering pad (1) is preferably comprised of layers (7) of crimped knitted mesh (5) of fibres (6), each fibre having a diameter greater than .001 inches and less than .006 inches and the ratio of the total surface area of the fibres in the pad being greater than 45 ft$^{-1}$ and less than 1400 ft$^{-1}$.

FIG 1.

EP 0 085 576 A2

TITLE:   SEPARATING DEVICES AND METHODS

DESCRIPTION

The present invention relates to separating devices and methods and, more particularly but not exclusively, to air filtering devices and methods for gas turbines for marine applications. For example, the device and method of the present invention are particularly useful for moisture separation for removing moisture particles entrained in the air entering the air intake of a gas turbine for ships.

Moisture separators are provided for gas turbines for marine applications as the moisture particles in the air generally contain salt which, if it should be introduced into the turbine, would deleteriously affect the component parts of the turbine, as for example, by chemical corrosion. Further, the dry particles entrained in the air, for example sand and/or salt crystals, can cause "pitting" of the turbine components if they are not removed. However, by far the greatest concern is the moisture particles containing salt.

One early, prior art, filter for removing moisture and other particles from the air introduced into the turbine comprised a single stage wire mesh pad placed in the air intake duct. The mesh pad was generally comprised of a plurality of layers forming an approximately two inch thick pad and each of the layers, in turn, comprised a plurality of .006 inch diameter wires knitted into a grid or screen having approximately five to six stitches per inch, i.e. there were approximately five wires per inch of length stitched or joined together. The moisture particles were removed as a result of the particles impacting against and being captured by the wires of the pad as the air passed through the filter. However, such a wire mesh pad did not adequately and efficiently remove all sized moisture particles entrained in the air and, thus, was not acceptable.

Another prior art device for removing moisture particles, which was found to be more acceptable, comprised a three stage separator in which the first and third stages were inertia separating vanes and the second stage was a coalescer. The first and third stage vanes had generally similar performance characteristics, one of which was that they exhibited very poor efficiency in removing smaller sized droplets - namely, eight microns and below. The reason for this is simply that inertia separating devices work on the principle that as the air flow turns to by-pass the vanes or other impacting medium, the moisture particles, being of larger size and more mass cannot make the turn and, instead, impinge or impact upon the impacting medium, thereby being removed from the air stream. However, these conventional inertia vanes do not prove efficient to remove lower size droplet particles since such particles, being of lighter mass, can make the turns to avoid impacting on the vanes. As a consequence, the prior art employed a second stage filter comprised generally of a plurality of polyester fibres of .001 inch diameter or smaller. The duty of the second stage was to capture the fine droplets by inertial impaction that had passed through the first stage. Owing to their small diameter, the capture efficiency of the fibres were high so some fibres would tend to collect several droplets which then coalesced or grouped together until a droplet was formed which was large enough to be re-entrained by the aerodynamic drag forces of the air passing therethrough. These re-entrained droplets were then captured by the third stage inertial device (either vanes or cyclones).

However, the presence of three stages adds greatly to the overall size and weight of the moisture separator, which already is quite large in order to achieve the high mass flow rates needed by the gas turbines for ships (on the order of 2000 cubic feet per second). Further still, the use of the polyester fibre pad having a plurality of closely spaced and dense fibres, each of a small diameter (on the order of .001 of an inch or smaller) tends to increase the flow resistance, and thus the pressure drop across the separator, for a given velocity of air flow. Thus, to achieve the desired flow rate, the size of the polyester pad and thus the size of the air duct in which the moisture separator is supported also have to be increased in size, thereby further adding to the weight, bulkiness and cost of the separating device.

These and other disadvantages of the prior art are overcome by the improved devices and methods of the present invention for removing particles entrained in air passing therethrough.

According to the invention, there is provided a method of removing particles entrained in air, the air including particles of moisture, in which the air is passed consecutively through a plurality of separating means for removing particles from the air including an inertia separating means and an impact separating filter pad, characterised in that the first separating means through which the air is passed is an impact separating filter pad and in that air from said pad is then passed through an inertia separating means.

The invention also provides a separator assembly for an air intake duct of a turbine device for removing particles, including moisture particles, from air being introduced into said turbine device, comprising a plurality of separating means for removing particles from the air including an inertia separating means and an impact separating filter pad and an impact separating filter pad, characterised in that the first separating means is an impact separating filter pad and the next separating means is an inertia separating means.

Desirably, the impact separating filter pad and the inertia separating means are the only separating means through which the air passes.

Preferably, the impact separating filter pad comprises at least one layer of a plurality of fibres, each fibre having a diameter greater than .001 inches and less than .006 inches, and the ratio of the total surface area of the fibres in the pad to the volume of the pad being greater than 45 $ft^{-1}$ and less than 1400 $ft^{-1}$.

In this way, efficient filtering can be provided which may remove all size particles and, in particular, remove smaller size particles which conventional inertia separating vanes or cyclones are not capable of removing.

The first inertial stage of the prior art three-stage separator was required to prevent heavy sea water spray overloading the fibre mat. The fibre mat was required to remove the small particulate present in the aerosols.

The impact separating filter pad of the present invention can combine the functions of both the first stage inertial vanes and the fibre mat coalescer.

The impact separating filter pad can remove large concentrations of sea water spray from the air stream without becoming overloaded. In fact, the presence within the pad of sea water assists the small particle removal efficiencies. The pad can, therefore, replace both the inertia first stage separating vanes and the fibre mat with improved separation efficiency and lower differential pressure. A lofted arrangement of knitted mesh fibres within the pad can ensure that the droplets collected within the pad grow to large sizes prior to being re-entrained into the high velocity air stream.

The high velocity and large size of the droplets can ensure their complete removal by a subsequent inertial separating device, e.g of a hooked vane type.

These, and other advantages, of the present invention will be apparent from the following detailed description in which reference is made to the enclosed drawings which illustrate by way of example a preferred embodiment of the present invention and in which

Fig. 1 is an isometric view of a separator assembly in accordance with the invention,

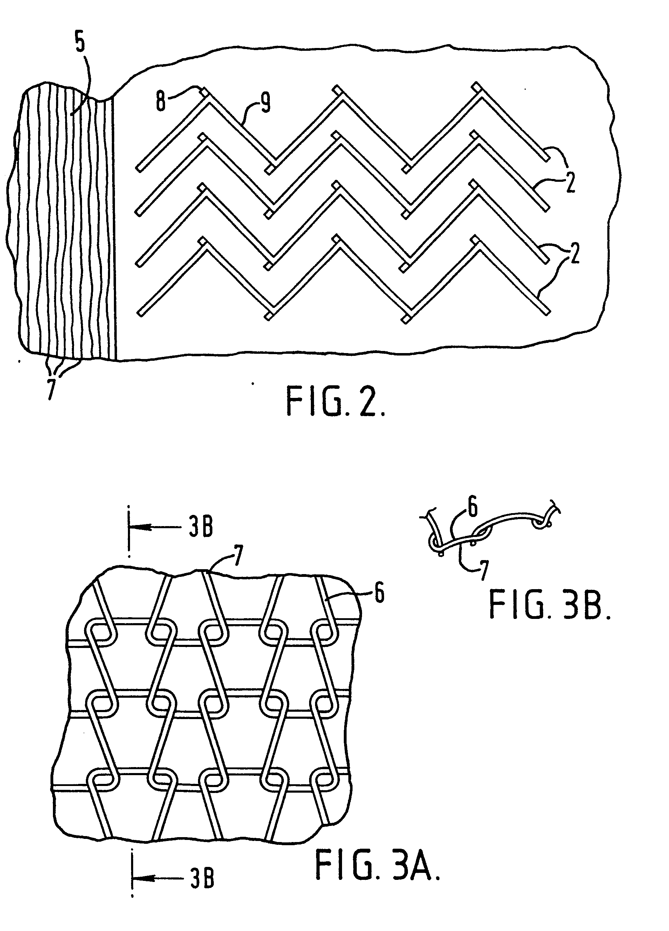

Fig. 2 is a partial section on line 2-2 of Fig. 1,

Fig. 3A is a view of a detail, and

Fig. 3B is a section on line 3B-3B of Fig. 3A.

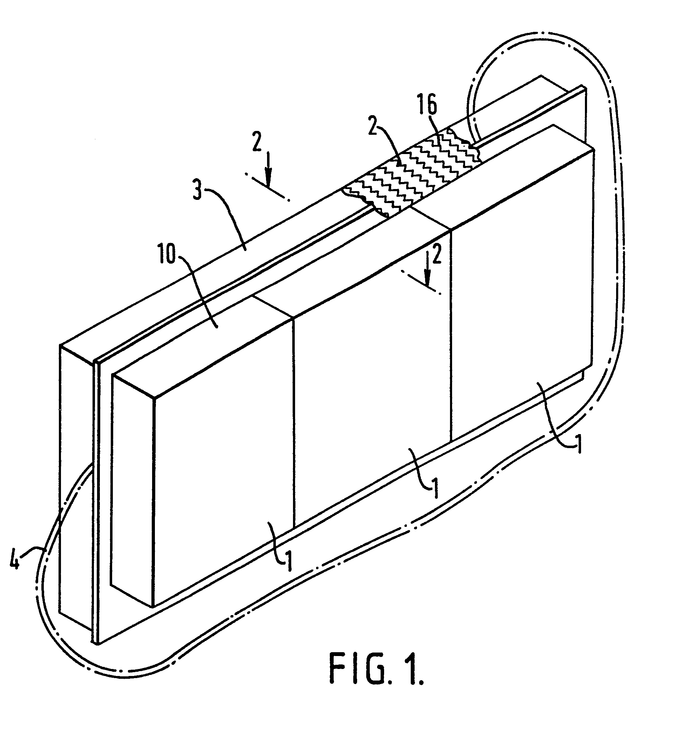

In the drawings, there is shown in Fig. 1 a separator assembly 3 placed in the air intake duct 4 of a gas turbine (not shown). As the assembly is particularly useful for removing moisture particles entrained in the air in which the moisture particles contain salt, it is particularly useful for use with gas turbines encountering marine or similar environments. The assembly is also useful in removing dry particles entrained in the air, such as for example, sand, salt crystals, etc., which also have a tendency to damage turbine components. However, as the assembly is primarily intended to remove moisture particles entrained in air, it will be described with reference to such application.

In a gas turbine for marine applications, the air duct is placed high up in the ship or the vehicle so that as little moisture as possible will be entrained in the air being introduced into the gas turbine. The separator assembly is mounted at the entrance of the air duct. The required air flow to be introduced to the turbine is of the order of magnitude of 2000 cubic feet per second or greater. The mass flow rate, in turn, is dependent upon the cross-sectional area of the duct through which the air is introduced and the velocity of the flow therethrough. For example, if the flow velocity through the duct can be increased, the cross-sectional area of the duct (and thus the size of the duct) can be reduced substantially. On the other hand, the pressure drop across the separator assembly placed in the duct must be maintained at an acceptable level. As the pressure drop across the separator assembly is dependent on both the flow resistance offered by the assembly and also the velocity of the flow therethrough, the pressure drop thus serves as a limit on the increase in flow velocity which can be obtained to satisfy the requirements for a given mass flow rate. Therefore, as it is desirable to decrease the size of the air duct (to save on costs, weight, etc.), it is desirable to design the separator assembly so as to have as low a flow resistance as possible. At the same time, the reduction in flow resistance offered by the separator assembly must not be such as to impair the efficiency to remove the moisture particles from the air passing through it.

With these principles in mind, the separator assembly will now be discussed.

The high efficiency removal of particles is carried out within a pad 1 of knitted mesh material 5. The knitted mesh material 5 is manufactured from either metal or synthetic wettable fibres 6 of diameter greater than .001 and less than .006 inches (preferably .002 inches) knitted into a mesh of between 5 and 25 stitches per inch. The pad 1 is made up of a plurality of layers 7 of crimped knitted mesh material with the crimp of alternative layers oppositely handed. The crimp ensures separation of the superimposed layers 7. The layers 7 of the pad are supported in a frame 10 which is fixed in the assembly on the upstream side of inertia separating vanes 2.

Preferably, the fibres 6 forming the layers 7 of the pad 1 are comprised of Monel wire. Monel is especially useful in marine applications since it is especially resistant to salt water corrosion. The fibres 6 have been knitted together to form a mesh 5, or grid, having the fibres joined or tied together. Preferably, the diameter of the fibres 6 is of the order of .002 inches but the diameter can range from greater than .001 inches to less than .006 inches. With .002 inch diameter fibres it has been found, with conventional knitting apparatus, that there may be between 10 to 12 stitches or joints per inch of mesh. That is, in a one inch length of the mesh 5, there are approximately 10 to 12 fibres. The fibres are crimped so that each of the layers does not lie completely flat. Thus, when the layers 7 are combined to form the pad 1, the layers 7 will not lie flat against one another but, instead, will provide a cushioning or lofted medium. Preferably, the crimp is sufficient to allow no more than 20 to 24 layers per inch of depth of the pad 1. Without the crimping of the fibres, it has been found there would be approximately 70-75 layers 7 of wires per inch of pad 1 depth. The reason that crimping of the fibres is desirable is, that for a given number of layers 7, the resistance to flow will be lower and the self-cleaning properties increased if the distance between adjacent layers 7 is increased.

The sea water aerosols collected within the pad 1 wet the fibres 6 and form droplets within the interstices of the pad. The mesh 5 size and the layers 7 are such that these droplets grow large, several millimeters in diameter, before the aerodynamic drag forces entrain them into the air stream. The droplets re-entrained are large and removed by a following arrangement of hooked vanes 2.

The knitted mesh pad 1 operates at a high face velocity, between 15 and 35 ft. per second (400-2100 cfm per ft.$^2$ of media frontal area).

With respect to the various parameters for designing moisture separating devices for gas turbines, it is to be noted that the efficiency of a pad for removing a particular size particle from the air is expressed by the well-known relationship for capture in a lattice arrangement:

$$n_p = 1 - 3^{-.212n_f at}$$

where:

$n_p$ = the efficiency for removing a particular size particle;

$n_f$ = the efficiency of a single fibre for removing such particular size particle;

a = the ratio of the total surface area of the fibres of the pad to the volume of the pad; and

t = the thickness of the pad.

Thus, as it is desirable to maintain the efficiency as close to one as possible, it is desirable to increase the product $at$. On the other hand, the pressure drop across the pad is related to the quantity $a^2t$. Thus, increasing 'a' to too great a quantity, will cause the pressure drop across the pad to increase, which as noted above, is undesirable. On the other hand, it should be noted that the thickness of the pad 1 is one dimension which also goes into determining the volume of the pad 1. Thus, the effect on the pressure drop by simply increasing the pad 1 thickness (but maintaining the number and size of the fibres the same) actually serves to decrease the pressure drop.

Preferably, in the separator assembly of the present invention, the values for 'a' should range between 45 ft.$^{-1}$ to approximately 1400 ft.$^{-1}$. In this way, the efficiency can be maximized while at the same time the pressure drop maintained at an acceptable level. More preferably, the value for 'a' should range between 75 and 200 ft.$^{-1}$. Also, it has been found desirable to maintain the thickness of the pad 1 between $\frac{1}{2}$ inch and five inches, although, of course, a lesser thickness, even down to a single layer of fibre mesh, could be utilized depending on the desired efficiency characteristics and pressure drop characteristics for a particular application. Preferably, the thickness of the pad 1 is approximately three inches and comprises on the order of 70 layers 7 of the .002 inch diameter fibre having 10 to 12 stitches per inch. For such a pad 1 the value for 'a' is approximately 84 ft.$^{-1}$. If the pad 1 thickness was compressed to $1\frac{1}{2}$ inches, the value for 'a' would double to approximately 168 ft.$^{-1}$.

It is to be noted that with respect to the polyester pads utilized in the prior art, the value for 'a' was of the order of 1800 ft.$^{-1}$. Accordingly, for a given thickness of pad, the pressure drop across a polyester fibre pad of the prior art is significantly higher than across the preferred pad used in the present invention. Therefore, the velocity of the air flow through the pad 1 can be increased over that which was possible with the polyester pad of the prior art. Thus, the size and weight of the separator assembly (Fig. 1) can be substantially reduced while, at the same time, maintaining an acceptable pressure drop level. Furthermore, since higher velocities for the air flow through the separator assembly (Fig. 1) can be attained with the pad 1, the particle separation efficiency is also increased. This is as a result of the fact that droplet capture by impaction improves with an increase in velocity.

These retained droplets then grow within the interstices of the lofted media to sizes greater than 1 millimeter before the aerodynamic drag forces are large enough to overcome the adhesion of the droplets within the media. The large droplets, thus produced by the agglomeration of small droplets within the media, when re-entrained into the high velocity air stream, can be removed by the following stage of inertial vanes.

The final stage of the separator assembly (Fig. 1) is an arrangement of hooked vanes 2 to remove, by inertial separation, all droplets entrained from the pad. The inertial droplet collector consists of a plurality of multi-chevron vertical vanes 2 parallel to each other at a pitch between 0.5 to 1.5 inches so as to remove all the entrained droplets. The droplets are removed from the air stream between the vanes 2 by impaction with the vane surfaces at points 9 of momentum change caused by the tortuous path between the vanes 2. The impacted water droplets are removed from the vane surfaces, and from possible re-entrainment into the air stream, by vertical pockets 8 on the vanes which direct the collected water vertically to a drain box at the base of the vanes 2.

The vanes 2 are comprised of rigid corrosion resistant materials. Preferably, the vanes 2 are comprised of marine grade aluminium or 316 stainless steel.

The vanes 2 penetrate into the drain box to a greater vertical depth than their depth in the direction of the air flow in order to ensure that they cannot be bypassed via the drain box. This would cause salt water to be re-entrained from the drain box.

Accordingly, it will be seen that the two stage filtering device, in accordance with the present invention, results in significant advantages over the prior art. The efficiency for removing particles entrained in the air is maintained (if not increased) while reducing the number of filtering stages necessary. This, in turn, results in substantial savings in weight, cost, and size for the device. Furthermore, the air flow velocities through the air duct can be increased without increasing the pressure drop across the separator assembly, thus allowing for a still further reduction in size.

While the present invention has been described mainly in the context of removing moisture particles entrained in air for the gas turbines for ships, it will, of course, be understood by persons skilled in the art, that the present invention can also be used for removing other types of particles. For example, the pad is also efficient for removing sand or salt crystals which may be entrained in the air.

As a result of the reduction in size and weight of the separator assembly of the present invention, other features can be incorporated thereinto. For example, it is well known that separator assemblies for gas turbines for ships, being located high up on the ship where they are unprotected from the elements, freeze or ice up when the ships are in cold and icy waters. That is, the moisture that is removed from the air can freeze in the separator assembly, thereby significantly blocking the flow of air through the separator assembly. This, in turn, causes the pressure drop across the separator assembly to increase.

As can be appreciated, it is absolutely imperative that air always be delivered to the turbine, even if it means delivering air which might damage the turbine components. Accordingly, in the past, a door known as a "blow in" door has been provided in the air duct adjacent to the separator assembly which automatically opens if the pressure drop across the separator assembly increases too much. This, thus, allows unfiltered air to flow into the air duct to be delivered to the turbine.

However, with the separator assembly, according to the present invention, which allows for a significant reduction in size, it is possible to have the whole or part of the separator assembly itself comprise a "blow in" door. The whole or part of the separator assembly is rotatably supported in the air duct to rotate about a vertically oriented axis by means of pins located on the upper and lower surfaces of the first stage frame. During normal operation, all air flow into the duct must pass through the separator assembly. However, should icing occur, such as on the vanes or even in the pad, the pressure drop across the separator is sensed, and if a high limit is reached, a locking device will automatically be actuated to release the separator assembly. Because of the increased pressure differential across the separator assembly, the separator assembly will swing on the pins, thereby allowing the air to flow into the duct around the sides of the separator. This will ensure that sufficient air will always be delivered to the gas turbine. To prevent the separator assembly itself from becoming frozen in the opening to the duct, heaters may be provided around the perimeter of the opening to prevent freezing.

This feature of the separator assembly itself comprising a "blow in" door is possible since the size and weight is significantly reduced over that which was possible previously with prior art devices. That is, the size of the opening required for introduction of air can be reduced and three separating means are not necessary. Thus, the weight of the separator assembly can be significantly less to allow the separator assembly to be easily and freely swingable in the duct opening.

Reference was made hereinbefore to an embodiment having only two separating means. It will be understood that such embodiment would have only two separating means for effectively removing small particles but might if desired have an initial protecting screen of comparatively widely spaced slats or vanes for hindering ingress of snow or rain and such a screen is not to be considered as separating means as used in the present invention.

- 14 -                                    0085576

CLAIMS:

1. A method of removing particles entrained in air, the air including particles of moisture, in which the air is passed consecutively through a plurality of separating means for removing particles from the air including an inertia separating means and an impact separating filter pad, characterized in that the first separating means through which the air is passed is an impact separating filter pad (1) and in that air from said pad is then passed through an inertia separating means (2).

2. A method according to claim 1 characterised in that the impact separating filter pad (1) and the inertia separating means (2) are the only separating means through which the air passes.

3. A method according to claim 1 or 2 characterised in that the impact separating filter pad (1) comprises at least one layer of a plurality of fibres (6), each fibre having a diameter greater than .001 inches and less than .006 inches, and the ratio of the total surface area of the fibres in the pad to the volume of the pad being greater than 45 $ft^{-1}$ and less than 1400 $ft^{-1}$.

4. A separator assembly for an air intake duct of a turbine device for removing particles, including moisture particles, from air being introduced into said turbine device, comprising a plurality of separating means for removing particles from the air including an inertia separating means and an impact separating filter pad and an impact separating filter pad, characterised in that the first separating means is an impact separating filter pad (1) and the next separating means is an inertia separating means (2).

5. A separator assembly according to claim 4 characterised in that the impact separating filter pad (1) and the inertia separating means (2) are the only separating means in the assembly.

6. A separator assembly according to claim 4 or 5 characterised in that the impact separating filter pad (1) comprises at least one layer of a plurality of fibres (6), each fibre having a diameter greater than .001 inches and less than .006 inches, and the ratio of the total surface area of the fibres in the pad to the volume of the pad being greater than 45 ft$^{-1}$ and less than 1400 ft$^{-1}$.

7. A separator assembly according to claim 4, 5 or 6 characterised in that the impact separating filter pad (1) comprises a plurality of layers (7) of crimped knitted mesh (5) of said fibres (6) with the crimp of alternative layers oppositely handed, said mesh having between 5 and 25 stitches per inch.

8. A separator assembly according to claim 4, 5, 6 or 7 characterised in that the inertia separating means (2) is a vane type separator.

9. A turbine device in combination with a separator assembly according to any of claims 4 to 8.

FIG. 1.

FIG. 2.

FIG. 3B.

FIG. 3A.